# EUROPÄISCHE PATENTSCHRIFT

(11) **EP 0 324 168 B1**
(45) Veröffentlichungstag und Bekanntmachung des Hinweises auf die Patenterteilung: **24.03.1993**
(21) Anmeldenummer: 88121754.1
(22) Anmeldetag: 28.12.1988
(51) Int. Cl.: B21B 35/14, F16C 3/18

(54) **Walzwerksantrieb mit Zahngelenkspindel**
Rolling mill drive with gear-type spindle couplings
Entraînement pour laminoir ayant des accouplements d'allonge du type à dentures

(30) Priorität: 15.01.1988 DE 3800999; 08.04.1988 DE 3811790
(43) Veröffentlichungstag der Anmeldung: 19.07.1989
(73) Patentinhaber: SMS SCHLOEMANN-SIEMAG AKTIENGESELLSCHAFT, 40237 Düsseldorf (DE)
(72) Erfinder: Vosbeck, Heinz, D-5912 Hilchenbach (DE); Artel, Gerhard, D-5942 Kirchhundem (DE); Stelbrink, Jürgen, D-5912 Hilchenbach (DE)
(74) Vertreter: Müller, Gerd, Dipl.-Ing.

(56) Entgegenhaltungen:
- DE-A- 1 902 894
- DE-A- 2 460 840
- DE-A- 3 706 577
- GB-A- 1 076 592
- US-A- 2 909 045
- US-A- 3 126 722
- US-A- 4 137 999
- PATENT ABSTRACTS OF JAPAN, Band 9, Nr. 111 (M-379)[1834], 15. Mai 1985; & JP-A-59 231 214 (HITACHI SEISAKUSHO K.K.) 25-12-1984
- PATENT ABSTRACTS OF JAPAN, Band 7, Nr. 237 (M-250)[1382], 21. Oktober 1983; & JP-A-58 125 303 (HITACHI SEISAKUSHO K.K.) 26-07-1983
- SOVIET INVENTIONS ILLUSTRATED, Section General/Mechanical; Woche 8508, 3. April 1985, Accession-Nr. 85-049059/08, Derwent Publications Ltd., London, GB; & SU-A-1 103 915 (NOVO-KRAMATORSKII) 23-07-1984

## Beschreibung

Die Erfindung betrifft einen Walzwerksantrieb mit zwischen Antriebswellen und angetriebenen Walzen insbesondere zwischen den Abtriebszapfen der Kammwalzen und den Antriebszapfen der Walzen angeordneten axial verschiebbaren Gelenkspindeln, an deren Spindelkopf jeweils ein eine Bogenverzahnung aufweisender Kupplungstreffer und eine diesen Treffer umgreifende mit Innenverzahnung versehene Kupplungshülse angeordnet ist, die ihrerseits mit dem Kammwalzenzapfen bzw. Walzenzapfen verbunden ist, wobei die Gelenkspindel zwischen den Kupplungshülsen mit Hilfe von mindestens einem im Bereich der Spindelachse angeordneten Stützelement und axial verstellbarer Druckstößel geführt wird und wobei die Innenverzahnung der Kupplungshülse die Bogenverzahnung des Treffers übergreift.

In neuzeitlichen Walzwerken ist es erforderlich, die Walzarbeit zu beschleunigen, die Walzgenauigkeit zu erhöhen und die Arbeitsgeschwindigkeit heraufzusetzen. Um dabei möglicherweise auftretende Planheitsfehler des gewalzten Gutes auszugleichen, werden bspw. die Arbeitswalzen im Walzgerüst um bestimmte Stellbereiche axial verschoben, um kontrolliert mittlere Bandwölbungen bzw. Bandkantenwölbungen günstig zu beeinflussen. Zu diesem Zweck bewirkt ein geeigneter Stellantrieb die translatorische Verschiebung der Arbeitswalzen um genau vorgegebene Beträge im Walzgerüst, während der rotatorische Antrieb der Arbeitswalzen in bekannter Weise über Gelenkspindeln erfolgt, die zwischen den angetriebenen Arbeitswalzen und den antreibenden Kammwalzen angeordnet sind. Da die Kammwalzen in ortsfesten Gerüsten gelagert sind und ihrerseits über geeignete Getriebeanordnungen mit Antriebsmotoren in Verbindung stehen, müssen die Gelenkspindeln so ausgebildet sein, daß sie einerseits die jeweilige Verlagerung der Arbeitswalzen im Walzgerüst ausgleichen und andererseits die volle Antriebsleistung von den Kammwalzen auf die Arbeitswalzen übertragen können.

Gemäß einer älteren Patentanmeldung P 37 06 577.7 ist deshalb bei einer Gelenkspindel der eingangs beschriebenen Gattung vorgeschlagen worden, die Gelenkspindel an dem der Kammwalze zugeordneten Ende so auszubilden, daß der die Bogenverzahnung tragende Kupplungstreffer in Form einer langen Hülse ausgebildet wird, die über einen wesentlichen Teil der Spindelwelle geschoben ist und wobei die Innenfläche der Trefferhülse und der Außenmantel der Spindelwelle jeweils eine längsgerichtete aufeinander abgestimmte Verzahnung, z.B. eine Keilnutverbindung, aufweisen. Die Verzahnungslänge ist zumindest so bemessen, daß der gesamte Verstellweg der Arbeitswalze ausgeglichen werden kann. Die Winkelverlagerung der Gelenkspindel erfolgt dagenen in bekannter Weise im Spindelgelenk, welches von der Bogenverzahnung des Kupplungstreffers und von der Innenverzahnung der Kupplungshülse gebildet wird. Diese konstruktiven Maßnahmen zum Längenausgleich der Gelenkspindel und zur Anpassung der Spindel an die jeweilige Lage der Arbeitswalzen haben sich in der Praxis vielfach und zuverlässig bewährt, wenngleich sich zeigte, daß bei der Verschiebung der Trefferhülse auf der Spindelwelle größere Reibungskräfte in der Verzahnung zu berücksichtigen waren.

Aus der japanischen Offenlegungsschrift 59-231214 (A) ist eine Zahngelenkkupplung mit den Merkmalen der Gattung der vorliegenden Patentanmeldung bekannt. Diese bekannte Zahngelenkspindel sieht eine Verschiebung ausschließlich in der an der Abtriebswelle des Kammwalzgetriebes angeordneten Kupplungshülse vor, die den Kupplungstreffer mit der Bogenverzahnung übergreift. Lange Verschiebewege der Walze nach jeder Seite, wie sie zur Beeinflussung des Profils oder der Planheit von breitem Walzband erforderlich sind, können mit der vorbekannten Konstruktion nicht bewerkstelligt werden, da der Beugewinkel stark eingeschränkt wird und an dieser Kupplungsstelle die gesamten Reibungskräfte während des Verschiebens aufzunehmen und konstruktiv auszugleichen sind. Der hierdurch bedingte größere Konstruktions- und Fertigungsaufwand ist wirt-schaftlich nicht vertretbar.

Aus der GB-1 076 592 (A) ist ein Walzwerksantrieb bekannt, bei welchem das Getriebegehäuse vereinfacht werden soll. Um das Getriebegehäuse nur mit einer einzigen horizontal liegenden Verbindungs- bzw. Trennkante zu versehen, sind die beiden Getriebeabtriebswellen horizontal aber beabstandet zueinander angeordnet, was eine stark winklige Anordnung der Gelenkspindeln nach sich zieht. Zum Ausgleich der stark winkligen Spindelanordnung, wird der Einsatz von Gleichlaufkupplungen gefordert, die sehr teuer sind und keine hohen Drehmomente übertragen können.

Die japanische Patentanmeldung 58-125303 (A) beschreibt einen Walzwerksantrieb, mit dem die Arbeitswalzen in einem Walzgerüst um bestimmte Winkel gegeneinander verschränkt werden könne, um auf diese Weise auf das Profil oder die Planheit eines Walzbandes Einfluß nehmen zu können. Eine horizontale Verschiebung der Walzen im Walzgerüst über große Verschiebewege ist nicht vorgesehen. Da bei der veränderbaren Schränkung der Walzen nicht unerhebliche Schrägungswinkel erforderlich werden können, sind zur Verbindung von Walze und Gelenkspindel Gleichlaufgelenke erforderlich, die bekanntermaßen kompliziert aufgebaut sind und in ihrer Übertragungsleistung ebenfalls beschränkt sind.

Aufgabe der vorliegenden Erfindung ist es, den gattungsgemäßen Walzwerksantrieb zu verbessern. So soll der konstruktive und fertigungstechnische Aufwand der Maschinenelemente zur Ausgestaltung der translatorischen Verschieblichkeit und zum vertikalen Winkelausgleich der Gelenkspindel vermindert werden. Ferner sollen die bei der Verschiebung der Gelenkspindel zu überwindenden Reibungskräfte deutlich verringert werden.

Diese Aufgabe wird erfindungsgemäß dadurch gelöst, daß die übergreifende Länge der Innenverzahnung der jeweiligen Kupplungshülse so bemessen ist, daß sie dem halben Maß der axialen Verschieblichkeit der Gelenkspindel entspricht, und daß die Achse des Kupplungstreffers zu der Achse der Kupplungshülse in der horizontalen Ebene in einem vorgegebenen Ablenkwinkel steht, wobei der Ablenkwinkel konstant ist und maximal ein Winkelgrad beträgt.

Durch diese konstruktive Maßnahme übernimmt das Spindelgelenk mit Bogenverzahnung nicht nur die Winkelanpassung der Gelenkspindel in der Vertikalebene an die verschiedensten Banddicken des Walzgutes und die Anpassung an die jeweils vorliegenden Verschleißzustände der Arbeitswalzen, sondern ermöglicht darüber hinaus die axiale Verschieblichkeit der Gelenkspindel in weiten Bereichen. Das Spindelgelenk übt also eine Multifunktion in einer einzigen Einheit aus, was konstruktiv und fertigungstechnisch erhebliche Kosteneinsparungen mit sich bringt. Weitere Vorteile zeigen sich in einer deutlichen Reduzierung der bei der Verschiebung gegen die Reibungskräfte aufzubringenden Verstellkräfte. Gegenüber der bekannten Konstruktion zur Verschieblichkeit der Spindel mit einer längsgerichteten Außenverzahnung auf dem Spindelumfang und einer entsprechenden Innenverzahnung im aufgebohrten Kupplungstreffer greifen die von der Spindel zu übertragenden Momente in einem von der Spindelachse radial größeren Abstand an, so daß hierdurch die bei der Verschiebung auftretenden Kräfte in der verzahnten Kupplung ganz erheblich reduziert werden. Da der gesamte gewünschte Verstellweg von den beiden Kupplungshülsen je zur Hälfte ausgeglichen wird, kann die die Bogenverzahnung übergreifende Innenverzahnung der Kupplungshülse möglichst kurz bemessen werden. Eine weitere beträchtliche Reduzierung der Reibungskräfte, die der Axialverschiebung entgegenwirken könnten, erfolgt dadurch, daß die Achse des Kupplungstreffers zu der Achse der Kupplungshülse in einem vorgegebenen und konstanten Ablenkwinkel steht. Da die Spindelgelenke bei einem vertikalen Anstellen der Walzen auch den Winkel 0° in der vertikalen Ebene erreichen können und damit höhere Reibungskräfte einhergehen, wird diesem Ansteigen der Reibungskräfte mit einem Ablenkwinkel außerhalb der vertikalen Ebene entgegengewirkt. Der Ablenkwinkel ist konstant und erreicht einen Winkel zwischen größer 0° und kleiner 1°; d. h., daß bereits einige Zehntel Grad Ablenkwinkel genügen, um eine Reduzierung der Reibungskräfte zu erreichen.

Zweckmäßigerweise wird der Ablenkwinkel gebildet durch einen in der horizontalen Ebene fest eingestellten Achsversatz zwischen dem Abtriebszapfen der Kammwalze und dem Antriebszapfen der Walze.

Zu einer weiteren Ausgestaltung der Erfindung wird vorgeschlagen, daß im Bereich der Spindelköpfe der Gelenkspindel die Stützelemente und Druckstößel angeordnet sind, wobei der Druckstößel mittels zugeordneter Federn über seinen ballig ausgebildeten Stößelkopf mit einer entsprechend ausgebildeten Gegenfläche eine Federspannkraft gegen die jeweilige Kupplungshülse ausübt, die ihrerseits die Gegenfläche trägt. Ferner wird in Ausgestaltung der Erfindung vorgeschlagen, daß die jeweiligen Druckstößel in Führungshülsen koaxial zur Spindelachse so gehalten sind und so lang bemessen sind, daß deren axiale Verstellbarkeit zumindest dem halben Maß der axialen Verschieblichkeit der Gelenkspindel entspricht. Der Druckstößel folgt also infolge Federkraft verzögerungsfrei und maßgenau der verlagerten Kupplungshülse der Gelenkspindel und folglich auch der mit der Hülse verbundenen Stützkalotte, wodurch in jeder verschobenen Lage der Gelenkspindel eine einwandfreie Führung und axiale Zentrierung der Gelenkspindel zwischen den Kupplungshülsen gewährleistet ist.

Zweckmäßigerweise sind die Gegenfläche, der Druckstößel und die Federn an beiden Spindelköpfen gleichartig ausgebildet bzw. sind die Federn hinsichtlich ihrer Federkraft gleich groß bemessen, was zu einer Standardisierung der Bauteile und damit unter vielen Aspekten zu einer Kostenreduzierung beiträgt.

Die Erfindung wird anhand des folgenden Ausführungsbeispiels einer Gelenkspindel näher erläutert. Es zeigen
- Figur 1:: Die Gelenkspindel in geschnittener Seitenansicht.
- Figur 2 und Figur 3:: Das der Arbeitswalze zugewandte Spindelgelenk in unterschiedlicher Stellposition.
- Figur 4a:: Die schematische Darstellung der vertikalen Winkelverlagerung der Antriebszapfen der Walzen.
- Figur 4b:: Die schematische Darstellung des horizontalen Achsversatzes zwischen Kammwalzenzapfen und Walzenzapfen.

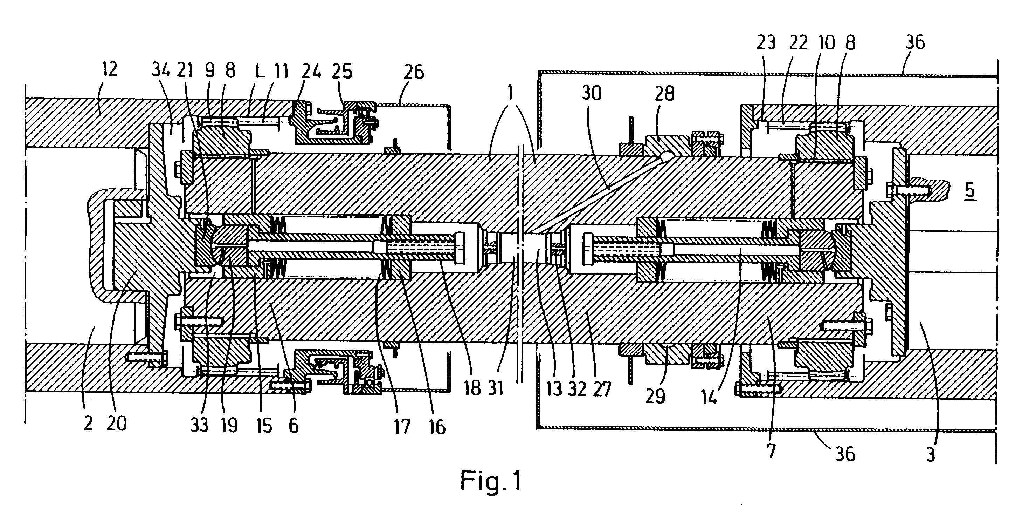

Der in Fig. 1 dargestellte Walzwerksantrieb besitzt eine Gelenkspindel 1, die zwischen den Wellenzapfen 2, 3, einer nicht näher gezeigten Arbeitswalze 4 und einer Kammwalze 5 angeordnet ist. Die Gelenkspindel 1 weist zu beiden Enden d.h. im Bereich der Spindelköpfe 6, 7 jeweils einen Kupplungstreffer 8 auf, der mit einer Bogenverzahnung 9 versehen ist und der auf dem jeweiligen Spindelkopf 6, 7 z.B. mittels Keilnutverzahnung 10 oder Paßfeder oder dergleichen fest angeordnet ist. Den Kupplungstreffer 8 umgreift eine mit einer Innenverzahnung 11 versehene Kupplungshülse 12. Die Kupplungshülse 12 der Gelenkkupplung ist drehfest mit dem Wellenzapfen 2 der Arbeitswalze 4 bzw. mit dem Wellenzapfen 3 der Kammwalze 5 verbunden.

An beiden Spindelköpfen 6, 7 ist im Bereich der Spindelachse 13 ein Druckstößel 14 angeordnet, der in Führungshülsen 15, 16 geführt ist und von einem Federpaket aus Tellerfedern 17 umgeben ist, die sich an den Führungshülsen abstützen. Der Druckstößel 14 hat an seinem den Wellenzapfen 2, 3 zugewandten Ende einen gegenüber dem Stößelschaft 18 größeren Stößelkopf 19, der stirnseitig ballig geformt ist und mit einer entsprechend geformten Gegenfläche 21 zusammenwirkt, die in ein mit der Kupplungshülse 12 verbundenes Stützelement 20 mittig eingepaßt ist. Mit Hilfe der Tellerfedern 17, die sich gegen eine der Führungshülsen 16 abstützen, wird der Druckstößel 14 axial verstellbar gehalten, so daß der Stößelkopf 14 und die Gegenfläche 21 ständig unter federbelasteter Wirkverbindung stehen. Hierdurch wird die Gelenkspindel 1 zwischen den Wellenzapfen 2, 3 von Arbeitswalze bzw. Kammwalze geführt und justiert.

Im Ausführungsbeispiel ist die übergreifende Länge L der Innenverzahnung der jeweiligen Kupplungshülse 12 so bemessen, daß sie dem halben Maß der gesamten geforderten axialen Verschieblichkeit X entspricht, womit erreicht ist, daß jedes der Spindelgelenke geeignet ist, den halben Verstellweg der Arbeitswalze auszugleichen. Weiterhin ist die Länge der beiden achsmittig im Spindelkopf 6, 7 angeordneten Druckstößel 14 so bemessen, daß der Stößelschaft 18 durch die Führungshülse 16 hindurchgeführt ist und eine axiale Verschieblichkeit zuläßt, die mindestens dem halben Maß der axialen Verschiebbarkeit X der Gelenkspindel entspricht; so wird erreicht, daß die Gelenkspindel während jeder Änderung des Verstellweges X einwandfrei geführt und justiert bleibt. Vorteilhafterweise besteht die Innenverzahnung 11 der Kupplungshülse 12 aus einem ringförmigen Verzahnungselement 22, welches kraft-und/oder formschlüssig z.B. mit Hilfe einer Keilnutverbindung mit der Innenwandung 23 der Kupplungshülse 12 verbunden ist.

Zum Zwecke der einwandfreien Schmierung und Kühlung des Spindelgelenks ist eine Ölumlaufschmierung vorgesehen, die wie folgt beschrieben wird. Im Bereich des Spindelkopfes 7 der Gelenkspindel 1 ist in einem ortsfesten Ölgehäuse 36 ein Ölzuführungsring 28 angeordnet, der die Spindelwelle 27 umfaßt und auf der der Spindelwelle zugewandten Seite eine innenliegende Ringnut 29 hat, die in offener Verbindung mit einem zur Spindelachse führenden Ölkanal 30 steht. Dieser Ölkanal mündet in einen achsmittig angeordneten Zentralkanal 31, von dem das Schmieröl durch eine drosselnde Ölverbindung 32 den Druckstößeln 14 zugeleitet wird. Das Schmieröl wird in geeigneter Weise den Tellerfedern 17 zugeführt, und durch einen im Stößelschaft 18 angeodneten Kanal 35 wird die vom Stößelkopf 19 und Gegenfläche 21 gebildete Wirkfläche mit Schmieröl versorgt. Das Schmieröl wird anschließend in einem Ölsammelraum 33 gesammelt und von dort in einen weiteren Ölsammelraum 34 geleitet, in dem die Bogenverzahnung 9 des Kupplungstreffers und die Innenverzahnung 11 der Kupplungshülse 12 miteinander kämmen.

Der Ölsammelraum 34 ist mit einem mit Ölabfuhr versehenen, auf der Kupplungshülse drehbar gelagerten Ölgehäuse 26 verbunden, wozu die drehende Kupplungshülse 12 eine Labyrinthdichtung 25 aufweist, deren andere Dichtungselemente mit dem Gehäuse verbunden sind. Durch die Umlaufschmierung wird einerseits eine einwandfreie Versorgung aller Schmierstellen der Gelenkspindel mit Schmiermitteln sichergestellt als auch für die erforderliche Abfuhr der Reibungswärme aus dem Spindelgelenk gesorgt.

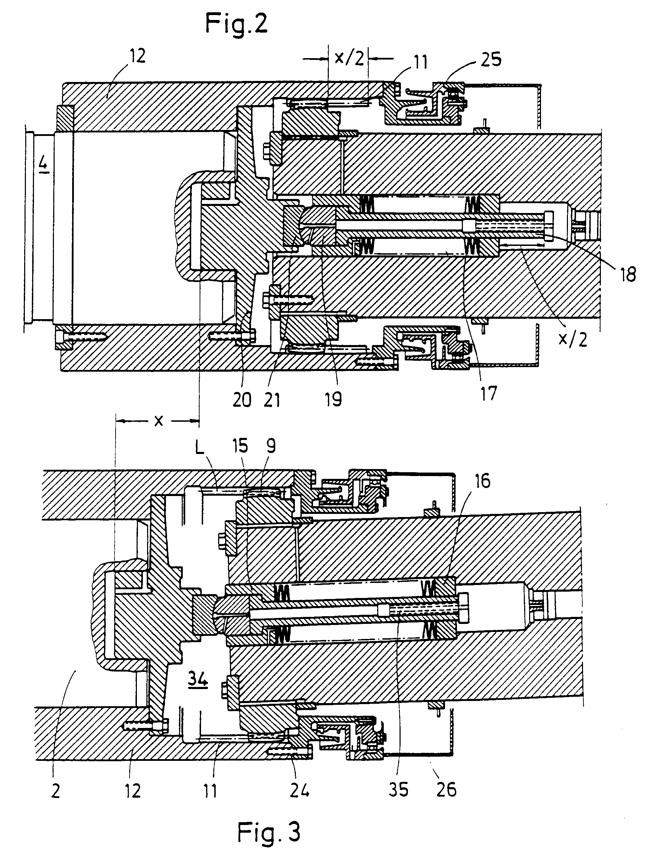

Die Figuren 2 und 3 zeigen zwei Stellpositionen des Spindelgelenks. In Fig. 2 befindet sich der Wellenzapfen 2 der Arbeitswalze 4 in einer äußersten nach rechts gegen die Gelenkspindel verschobenen Stellung. In Fig. 3 befindet sich der Walzenzapfen 2 der Arbeitswalze 4 in einer äußersten nach links von der Gelenkspindel verschobenen Stellung. Der gesamte Verstellweg des Wellenzapfens 2 und damit der gesamte Verstellweg der Arbeitswalze 4 wird von der Bogenverzahnung 9 und der Innenverzahnung 11 von Kupplungstreffer 8 bzw. Kupplungshülse 9 ausgeglichen. Es ist zu erkennen, daß die die Bogenverzahnung 9 übergreifende Länge L der Innenverzahnung 11 der Kupplungshülse 12 so bemessen ist, daß sie dem halben Maß der axialen Verschieblichkeit X der Gelenkspindel entspricht. Auch ist zu erkennen, daß der Verstellweg des in den Führungshülsen 15, 16 beweglich geführten Druckstößels 14 mindestens dem halben Maß der axialen Verschieblichkeit X der Gelenkspindel entspricht. Von dem zweiten Spindelgelenk, welches gemäß der Darstellung in Fig. 1 eine dem ersten Spindelgelenk entsprechende konstruktive Gestaltung aufweist, wird die andere Hälfte des Verstellweges ausgeglichen.

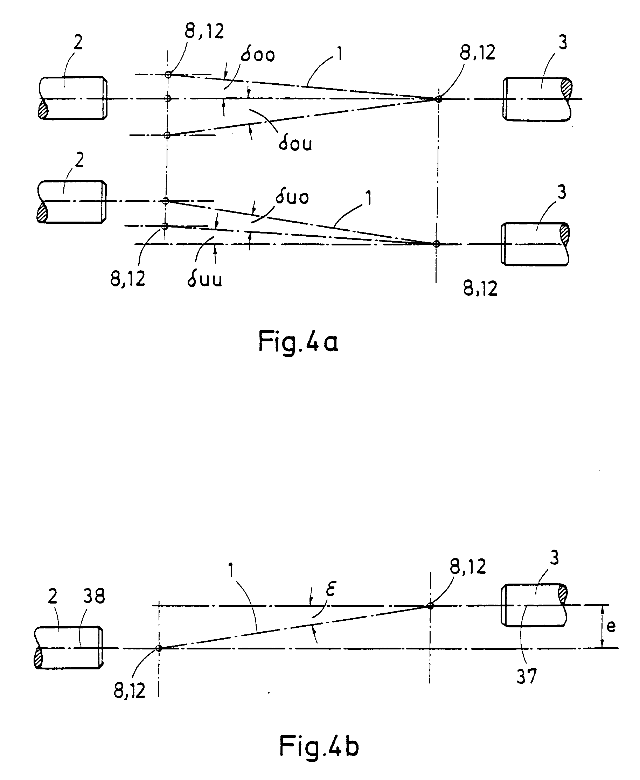

Fig. 4a zeigt in schematischer Darstellung die vertikale Verlagerung der Arbeitswalzen im Walzgerüst und zwar ist der Antriebszapfen 2 der oberen Arbeitswalze um den Winkel δₒₒ nach oben bzw. um den Winkel δₒᵤ nach unten verlagerbar, während der Antriebszapfen 2 der unteren Arbeitswalzen um die Winkel δᵤₒ bzw. δᵤᵤ in der Vertikalen verlagerbar ist je nach Walzgutdicke der Nachstellung der Walzen. Diese Winkelverlagerung δ der Arbeitswalzen ändert sich zusätzlich, wenn die Arbeitswalzen bzw. die hier gezeigten Wellenzapfen 2 gegeneinander axial verschoben werden. Die axiale und die vertikale Verlagerung der Arbeitswalzen werden von dem Spindelgelenk d.h. von Kupplungstreffer 8 und Kupplungshülse 12 der Gelenkspindel 1 ausgeglichen.

Um die hierbei an der Bogenverzahnung 9 von Kupplungstreffer 8 und an der Innenverzahnung 11 der Kupplungshülse 12 auftretenden und der axialen Verschiebung der Walzen entgegenwirkenden Reibungskräfte deutlich zu reduzieren ist gemäß Fig. 4b die Achse 37 der Kammwalze bzw. ihres Abtriebszapfens 3 gegenüber der Achse 38 der Arbeitswalze bzw. ihres Antriebszapfens 2 in der horizontalen Ebene um den Abstand e versetzt. Die Achse der Gelenkspindel 1 schließt mit den Achsen des Abtriebszapfens 3 und des Antriebszapfens 2 den Winkel ε ein. Aus konstruktiven Grünnden ist deshalb die Achse des Treffers zu der Achse der Kupplungshülse um diesen Winkel versetzt, wobei einige zehntel Grad ein ausreichendes Minimum sind, um infolge der Rotation unter dem Ablenkwinkel die erwähnten Reibungskräfte beträchtlich reduzieren zu können. Der Gesamtgelenkwinkel kann nach üblichen Rechenmethoden ermittelt werden, wobei in die Rechenformel der vertikale Verlagerungswinkel δ (Fig. 4a) und der horizontale Ablenkwinkel ε (Fig. 4b) eingehen.

### Bezugszeichenübersicht

- 1: Gelenkspindel
- 2: Antriebszapfen d. Arbeitswalze
- 3: Abtriebszapfen der Kammwalze
- 4: Arbeitswalze
- 5: Kammwalze
- 6: Spindelkopf
- 7: Spindelkopf
- 8: Kupplungstreffer
- 9: Bogenverzahnung
- 10: Keilverzahnung
- 11: Innenverzahnung der Kupplungshülse
- 12: Kupplungshülse
- 13: Spindelachse
- 14: Druckstößel
- 15: Führungshülse
- 16: Führungshülse
- 17: Tellerfeder
- 18: Stößelschaft
- 19: Stößelkopf
- 20: Stützelement
- 21: Gegenfläche
- 22: Verzahnungselement
- 23: Innenwand der Kupplungshülse
- 24: Ende der Kupplungshülse
- 25: Labyrinthdichtung
- 26: Ölgehäuse
- 27: Spindelwelle
- 28: Ölzuführungsring
- 29: Nut
- 30: Ölkanal
- 31: Zentralkanal
- 32: Ölverbindung
- 33: Ölsammelraum
- 34: Ölsammelraum
- 35: Ölkanal
- 36: Ortsfestes Ölgehäuse
- 37: Achse der Abtriebszapfen der Kammwalzen
- 38: Achse der Antriebszapfen der Arbeitswalzen

## Patentansprüche

1. Walzwerksantrieb mit zwischen Antriebswellen und angetriebennen Walzen (4), insbesondere zwischen den Abtriebszapfen (3) der Kammwalzen (5) und den Antriebszapfen (2) der Walzen angeordneten axial verschiebbaren Gelenkspindeln (1), an deren Spindelkopf (6, 7) jeweils ein eine Bogenverzahnung aufweisender Kupplungstreffer (8) und eine diesen Treffer umgreifende mit Innenverzahnung (11) versehene Kupplungshülse (12) angeordnet ist, die ihrerseits mit dem Kammwalzenzapfen bzw. Walzenzapfen verbunden ist, wobei die Gelenkspindel zwischen den Kupplungshülsen (12) mit Hilfe von mindestens einem im Bereich der Spindelachse (13) angeordneten Stützelement (20) und axial verstellbarer Druckstößel (14) geführt wird und wobei die Innenverzahnung (11) der Kupplungshülse (12) die Bogenverzahnung (9) des Treffers (8) übergreift,
**dadurch gekennzeichnet,**
daß die übergreifende Länge (L) der Innenverzahnung (11) der jeweiligen Kupplungshülse (12) so bemessen ist, daß sie dem halben Maß der axialen Verschieblichkeit (X) der Gelenkspindel (1) entspricht, und daß die Achse des Kupplungstreffers (8) zu der Achse der Kupplungshülse (12) in der horizontalen Ebene in einem vorgegebenen Ablenkwinkel (ε) steht, wobei der Ablenkwinkel (ε) konstant ist und maximal ein Winkelgrad (1°) beträgt.

2. Walzwerksantrieb nach Anspruch 1,
**dadurch gekennzeichnet,**
daß der Ablenkwinkel (ε) durch einen in der horizontalen Ebene fest eingestellten Achsversatz (e) zwischen dem Abtriebszapfen (3) der Kammwalze und dem Antriebszapfen (2) der Walze (4) gebildet wird.

3. Walzwerksantrieb nach Anspruch 1 oder 2,
**dadurch gekennzeichnet,**
daß im Bereich der beiden Spindelköpfe (6, 7) der Gelenkspindel (1) jeweils das Stützelement (20) und der Druckstößel (14) angeordnet sind, wobei der Druckstößel (14) mittels zugeordneter Federn (17) über seinen ballig ausgebildeten Stößelkopf (19) und einer entsprechend ausgebildeten Gegenfläche (21) eine Federspannkraft gegen die jeweilige Kupplungshülse (12) ausübt, die ihrerseits die Gegenfläche (21) trägt.

4. Walzwerksantrieb nach Anspruch 1, 2 oder 3,
**dadurch gekennzeichnet,**
daß die jeweiligen Druckstößel (14) in Führungshülsen (15, 16) koaxial zur Spindelachse (13) so gehalten sind und so lang bemessen sind, daß deren axiale Verstellbarkeit dem halben Maß der axialen Verschieblichkeit (X) der Gelenkspindel (1) entspricht.

5. Walzwerksantrieb nach mindestens einem der Ansprüche 1 bis 4,
**dadurch gekennzeichnet,**
daß die Gegenfläche (21), der Druckstößel (14) und die Federn (17) an beiden Spindelköpfen (6, 7) gleichartig ausgebildet sind bzw. die Federn (17) hinsichtlich ihrer Federkraft gleich bemessen sind.

## Claims

1. Rolling mill drive with articulated spindles (1), which are arranged to be between drive shafts and driven rolls (4), in particular between the output spigot (3) of the gear rolls (5) and the drive spigot (2) of the rolls, to be axially displaceable and at each spindle head (6, 7) of which are arranged a coupling wobbler (8) having a curved toothing and a coupling sleeve (12), which is provided with an internal toothing (11) engaging around this wobbler and which in its turn is connected with the gear roll spigot or roll spigot, wherein the articulated spindle is guided between the coupling sleeves (12) with the aid of at least one support element (20) and axially adjustable press rod (14), which are arranged in the region of the spindle axis (13), and wherein the internal toothing (11) of the coupling sleeve (12) engages over the curved toothing (9) of the wobbler (8), characterised thereby that the length (L) of the overengagement of the internal toothing (11) of the respective coupling sleeve (12) is so dimensioned that it corresponds to half the dimension of the axial displaceability (X) of the articulated spindle (1), and that the axis of the coupling wobbler (8) stands at a predetermined deflection angle (ε) in the horizontal plane relative to the axis of the coupling sleeve (12), wherein the deflection angle (ε) is constant and amounts maximally to one degree of angle (1°).

2. Rolling mill drive according to claim 1, characterised thereby, that the deflection angle (ε) is formed by an axial offset (e), fixedly set in the horizontal plane, between the output spigot (3) of the gear roll and the drive spigot (2) of the roll (4).

3. Rolling mill drive according to claim 1 or 2, characterised thereby that the support element (20) and the press rod (14) are each time arranged in the region of the two spindle heads (6, 7) of the articulated spindle (1), wherein the press rod (14) exerts a resilient tightening force against the respective coupling sleeve (12) by means of associated springs (17) by way of its spherically constructed rod head (19) and a correspondingly constructed counter surface (21), which coupling sleeve in its turn carries the counter surface (21).

4. Rolling mill drive according to claim 1, 2 or 3, characterised thereby, that the respective press rods (14) are so retained in guide sleeves (15, 16) coaxial with the spindle axis (13) and are dimensioned to be so long that the axial adjustability thereof corresponds to half the dimension of the axial displaceability (X) of the articulated spindle (1).

5. Rolling mill drive according to at least one of the claims 1 to 4, characterised thereby that the counter surface (21), the press rod (14) and the springs (17) are constructed in like manner at both spindle heads (6, 7) or the springs (17) are dimensioned to be equal with respect to their spring force.

## Revendications

1. Entraînement pour laminoir comportant, entre les arbres de commande et les cylindres commandés (4), en particulier entre les tourillons entraînés (3) des roues dentées (5) et les tourillons d'entraînement (2) des cylindres, des allonges d'entraînement (1) pouvant être déplacées axialement, chaque tête d'allonge (6,7) comprenant un élément d'accouplement (8) pourvu d'un endentement en forme d'arc et un manchon d'accouplement (12) pourvu d'un endentement intérieur (11) recouvrant l'accouplement, ledit manchon étant relié aux tourillons des roues dentées ou aux tourillons des cylindres, l'allonge d'entraînement se déplaçant, à l'aide d'au moins un élément de support (20) disposé près de l'axe (13) de l'allonge, et de pistons (14) pouvant être déplacés axialement entre les manchons d'accouplement (12) et l'endentement intérieur (11) du manchon d'accouplement (12) recouvrant l'endentement en forme d'arc (9) de l'élément d'accouplement (8), caractérisé en ce que la longueur (L) de recouvrement de l'endentement intérieur (11) du chaque manchon d'accouplement (12) est calculée de telle manière qu'elle correspond à la moitié de l'amplitude possible du déplacement axial (X) de l'allonge d'entraînement (1) et en ce que l'axe de l'élément d'accouplement (8) fait, dans le plan horizontal, un angle de déviation prédéterminé (E) avec l'axe du manchon d'accouplement (12), cet angle de déviation (E) étant constant et au maximum égal à un degré (1°).

2. Entraînement pour laminoir selon la revendication 1, caractérisé en ce que l'angle de déviation (E) est obtenu par un décalage (e) réglé dans un plan horizontal entre le tourillon entraîné (3) de la roue dentée et les tourillons d'entraînement (2) du cylindre (4).

3. Entraînement pour laminoir selon l'une des revendications 1 ou 2, caractérisé en ce que l'élément de support (20) et le poussoir (14) sont disposés près des deux têtes d'allonges (6,7) des allonges d'entraînement (1), le poussoir (14) exerçant, au moyen des ressorts (17), par l'intermédiaire de la tête bombée (19) du poussoir et d'une contre-surface (21) ayant une forme correspondante, une force de poussée élastique sur le manchon d'accouplement (12) qui porte la contre-surface (21).

4. Entraînement pour laminoir selon une des revendications 1, 2 ou 3, caractérisé en ce que les poussoirs (14) sont maintenus dans des boîtes de guidage (15,16) coaxialement par rapport à l'axe de l'allonge (13) et qu'ils ont une longueur calculée de telle manière que leur déplacement axial corresponde à la moitié du déplacement axial (X) de l'allonge d'entraînement (1).

5. Entraînement pour laminoir selon l'une au moins des revendications 1 à 4, caractérisé en ce que la contre-surface (21), le poussoir (14) et les ressorts (17) montés sur les deux têtes d'allonge (6,7) sont de même forme ou en ce que les ressorts (17) sont calculée de manière à être identiques eu égard à leur force élastique.
